# EUROPEAN PATENT APPLICATION

(11) **EP 1 779 918 A1**
(43) Date of publication of application: **02.05.2007**
(21) Application number: 04738427.6
(22) Date of filing: 19.07.2004
(51) Int. Cl.: B01D 47/00, E01H 3/04

(54) **A METHOD FOR PURIFYING AIR**

(71) Applicant: Du, Li, Xigang District Dalian, Liaoning 116013 (CN)
(72) Inventor: Du, Li, Xigang District Dalian, Liaoning 116013 (CN)
(74) Representative: Ungria Lopez, Javier
(86) International application number: PCT/CN2004/000830
(87) International publication number: WO 2006/007761

(57) **Abstract**

A method for purifying air comprises the following steps: arranging a container with one or more outlets in a bottom side thereof on the top of a building; connecting one or more ducts having a plurality of leakage holes to the outlets, slantwise enclosing them around the outer wall surface of the top of building and fixing the same, and making the one or more ducts encircle periphery of the top of the building, thereby the water from the leakage holes flowing down the wall; arranging a collecting gutter for receiving the falling water slantwise encircling the periphery of the outer wall surface at the bottom of the building, and connecting the gutter to a recipient having a function of filtration for temporarily storing the collected water and filtrating it which thus can be reused by the tip of the building. The method can be applied to the outer surface of all sorts of building, indoor publics and house residence.

## Description

### Technical Field

The present invention relates to a method for purifying air, which uses many parallel water flows to moisten surfaces of a high building to adsorb the floating granules in the air. The water, which adsorbs granules and dissolves harmful gases, is collected into a collecting gutter after it flows down, and is filtrated by a filtrating device for cyclic usage.

### Background Arts

To purify the air and reduce the floating granules in the air, the methods commonly used include building road with coverage surface to reduce the area where dust may rise, controlling the discharging of smoke and dust as well as auto offgas to reduce the discharge amount of pollutants, using such measures as sprinkling basin, sprinkler truck, or artificial raining to make the dust fall. The air can be purified effectively by increasing the area of grass land and forest land, but these measures have little effect because of the reducing size of green land and the increasing use amount of fuel caused by the city development. Therefore, the air purifying is mainly dependent on natural self-purifying.

In mountainous regions with flourish forest, the amount of floating granules is small. Even some granules are blown from cities by the wind, in addition to natural dust fall and the purifying by rain and snow, there is a self-purifying method, i.e. the dust is easily adsorbed by the surface of moist grass and woods with the help of the topography and the windward plant cover so that the dust cannot rise again.

In mountainous regions, many hills stand upright as cones, with many columnar woods standing on the hill surface. Such natural feature contacts the air dynamically containing dust flew by the wind. The floating dust is deposit by the forest surface with hygroscopic adsorption ability. Or the floating dust falls down the ground because it aggregates and its weight increases due to the soak of the moisture. Thus, the polluted air accomplishes self-purifying to a certain extent.

With the continuous development of cities, the size of green land is reducing and the proportion of the green land decreases gradually. The effect of self-purifying air by the woods is weakened. The environment and air quality deteriorate increasingly. Therefore, there is a need for measures for purifying air to improve the living environment by taking effective control measures while people make use of the environment resources overly. The granules floating in the air can fall down by moistening the surface of high buildings to replace partially the self-purifying function of various leaves and grass.

The floating granules are mobile and the water has adsorption ability. By making use of the aggregation of these two, the dust adsorbed by the water and the pollutants resolved by the water are flew with the water and collected through filtrating. An aggregation condition needs to be built to perform dust removal, i.e. the dust can be aggregated and falls down in such a way as raining and snowing. Quite a number of artificial water flows are provided as clinging to surfaces of various buildings to improve the aggregation possibility of the water and the mobile floating dust. The more the movement of parallel water flows is, the higher the aggregation possibility is, the bigger the amount of the adsorbed and resolved dust and pollutants is, and the better air purifying effect is.

Now, a great lot of high buildings stand in cities and a topography condition similar to that in mountainous regions already exists. It is possible to migrate the dust removal function of the mountainous plant cover to the surfaces of high buildings by moistening the surfaces of high buildings and combining with the function of the green land and thus making both the lower place and the higher place of cities have adsorption function similar to the surface of the plant cover. Then bionic air purifying in cities can perform dust adsorption and removal and inhibit the dust rising from the ground at the same time, that is, to make cities have the function of adsorbing granules floating with the wind similar to the plant cover in mountainous regions.

Similarly, if water flows, water shades or water screens of different sizes are provided indoors, the concentration of floating granules discharged indoors can be reduced and thus the air purifying will develop in a positive cycle direction.

Therefore, an effective method is required in cities to adsorb the floating granules to purify the air.

### Summary of the Invention

High buildings are all in columnar shape and stand upright. The water may be caused to flow down from top naturally or flow along the columnar surface, and the water flowing down may be collected, filtrated and returned to the top of high buildings. The moisture of the columnar surface can be maintained by such a cycle. The floating granules in the air may be adsorbed and flew to the site of filtrating continuously to reduce the air pollution.

The method of reducing the floating granules in the air proposed by the invention is to resolve an issue of how to reduce the concentration of the floating granules in the air by means of the adsorption ability and mobility of the water. The method according to the invention can be used to improve the indoor and outdoor air quality and thus is advantageous to people's body and mind health.

According to the method of the invention, a container with one or more water outlets in a bottom side thereof for water self-leakage is placed on the top of a building. The outdoor container may have an opening to collect rain and snow. Each water outlet is connected to a duct filled with the materials generating siphonage, and various flow-distribution holes are arranged on the duct. The ducts are fixed around the top of the building such that the leaking water flows down along the surface of solid. Otherwise the leaking water flows down as a water shade. It is better to absorb the floating granules flew by the wind to achieve the purpose of purifying and moistening the air with the water flowing down along the surface of solid. All the leaking water falling down will be collected by a collecting gutter surrounding the building at the bottom, and will be returned to the top container by a circulating device after filtrating.

According to the method of the invention, a container with one or more water leakage holes in a bottom side thereof for water self-leakage is placed at the top indoors. Each water leakage hole is connected to a duct filled with the materials generating siphonage, and various flow-distribution holes are arranged on the duct. The ducts are placed at the top indoors such that the leaking water flows down along the surface of solid. Otherwise the leaking water flows down as a water shade. It is better to absorb the floating granules flew by the wind to achieve the purpose of purifying and moistening the air with the water flowing down along the surface of solid. All the leaking water falling down will be collected by a collecting gutter at a lower position, and will be returned to the top container by a circulating device after filtrating.

People will feel like breathing fresh air near a sprinkling basin or waterfall by means of the method according to the invention. The method according to the invention provides the function of maintaining moistening certain indoor or outdoor surfaces.

The method according to the invention is especially suitable for the climatic condition before or after a rain in hot summer or a dry indoor air condition in winter. Under these two conditions, the pollutants in the air are most harmful to people.

### Specific Embodiments

There should be as many as possible flow paths for the water to flow down so that there is as big as possible moist areas in the building surface, like dense water shade. It is required that there are as many as possible water outlet starting points at the top. A duct ring is fixed to surround the top of the building. The drip irrigation duct technology used in the agriculture or other methods can be used to achieve the water distribution effect of as many as possible water flows, micro flows, and power saving. If the duct is filled with chemical fiber, silver sand or sponge strip, which materials are permanent and have siphonage, the cost can be reduced more compared with the drop irrigation duct technology. The filler has an effect of averaging the water pressure among all the holes so as to easily satisfy that the water leaks from all holes concurrently. The surrounding duct shall have an angle with the horizontal plane rather than being parallel to it so that the gravity of the water on the top of the building can take effect at large. There should be solid materials such as cement and paste, which do not tend to drop out, between each water leakage hole and the wall. The leaking water can be transferred to the wall surface along said attaching surface and then flow down along the wall surface. Then the water flowing down to the bottom may be collected by a collecting gutter and delivered together to a water tank, said collecting gutter should also be fixed slantwise with the horizontal plane and its side attaching to the wall surface should be maintained watertight so that the collected water completely flows into the collecting gutter on the ground. A filtrating device is arranged inside and outside the gutter to collect the dust. A pump is arranged to return the filtrated water to the top of the building for reuse.

There may be a plurality of ducts for water leakage so that there are multiple flows of leaking water flowing in parallel. The duct for water leakage can be in the form of a gutter arranged horizontally so that the water falls down in the way of overflow to form a water screen. Flowers and plants can be implanted between the leakage duct and the collecting gutter to save manpower for irrigating, and flowers and plants can also be implanted in the collecting gutter for collecting the flowing water.

### Embodiment I

According to the first embodiment, a method is provided to purify air with the outer surface of buildings. A water tank with a water outlet in a bottom side thereof is arranged on the top of a building, said water tank also has the function of collecting rain and snow to save water and power. A duct with multiple leakage points is connected to the water outlet and fixed slantwise to surround the outer wall surface of the building so that the leaking water flows down along the wall surface. At the bottom of the building, for example on the ground, a collector gutter is provided for receiving the falling water, which slantwise encircles the periphery of the outer wall surface at the bottom of the building, the gutter is connected to a recipient having a function of filtration for filtrating the collected water and temporarily storing it for cyclic use.

### Embodiment II

The second embodiment is substantially similar to the first one, except that a container with a plurality of water outlets in a bottom side thereof is arranged on the top of a building. The ducts with multiple leakage points are connected to the water outlets of the container respectively. The plurality of ducts for leaking water are fixed slantwise to surround the outer surface of the top of the building.

### Embodiment III

According to the third embodiment of the invention, a method is provided to purify the air within a hall of a public building. In a hall of a public building, a container for containing water is arranged at the top and is connected to a duct with flow-distribution functions, a collecting gutter is arranged at the lower place so that the water flowing down from said flow-distribution holes flows down along the wall or the surface of the solid to form parallel flows or the water flowing from said flow-distribution holes forms a water shade on a spatial plane. The moisture area size and the flow path length of the water dropping or flowing down are dependent on actual conditions. Thereby, the dust delivered from the indoor to the outdoor is reduced, and the indoor pollution concentration can also be decreased. A filtrating and circulating device can be used to achieve the water's cyclic usage.

### Embodiment IV

A method same as the third embodiment is employed to realize dynamic moistening on a certain wall surface or spatial plane in various rooms, so as to improve the indoor air quality, increase the humidity and decrease the concentration of floating dust. The degree that the outdoor pollution is aggravated by the indoor can be decreased at the same time.

Three of the above embodiments can be used in combination to prevent and inhibit the sources of floating granules in cities to a certain extent and reduce the concentration of the dust already floating in the air, wherein the reclaimed substance is valuable and reusable.

## Claims

1. An air purifying method, comprising the steps of:
arranging a container with one or more water outlets in a bottom side thereof on the top of a building,
connecting one or more ducts having a plurality of leakage holes to the outlets of said container, and slantwise enclosing the ducts around the outer wall surface of the top of building and fixing the same, and making the one or more ducts encircle periphery of the top of the building, thereby the water from the leakage holes flowing down along the wall; and
arranging a collecting gutter for receiving the falling water to slantwise encircle the periphery of the outer wall surface at the bottom of the building, and connecting the gutter to a recipient having the function of filtration, so that the collected water may be filtrated, temporarily stored and returned to the top of the building for cyclic usage.

2. The air purifying method according to claim 1, wherein said building is a multistoried building.

3. The method according to claim 1 or 2, wherein the water from the leakage holes may flow down along the upright solid surface and/or oblique surface of the building.

4. An air purifying method, **characterized in that**:
arranging a container with water outlets in a bottom side thereof on the top indoors,
connecting ducts with multiple leakage points to said outlets of said container, so that the leaking water flows down along the indoor wall or the upright or oblique surface of object or in a form of spatial plane to form a water shade or parallel water flows; and
arranging a collecting gutter slantwise at the lower place indoors to collect the water flowing down, said collecting gutter being connected to a container with a function of filtration, so that the collected water can be filtrated, temporarily stored and returned to the top of the building for cyclic usage.

5. The method according to any one of the preceding claims, wherein flowers and plants can be implanted between the leakage duct and the collecting gutter to save manpower for irrigating.

6. The method according to any one of the preceding claims, wherein the water from the leakage-distribution points can flow down and be gathered in the collecting gutter without along the surface of the object.

7. The method according to any one of the preceding claims, wherein plants can be implanted in the collecting gutter for collecting the water flowing down.

8. The method according to any one of the preceding claims, wherein the ducts for leakage can be filled with materials producing siphonage, said ducts having the function that the water flows from multiple leakage points.

9. The method according to any one of the preceding claims, wherein the duct for flow-distribution and flow-leakage can be mounted horizontally as a gutter so that the water can flow down in a way of overflow to form a water screen.
